# EUROPÄISCHE PATENTSCHRIFT

(11) **EP 3 676 520 B1**
(45) Veröffentlichungstag und Bekanntmachung des Hinweises auf die Patenterteilung: **04.08.2021**
(21) Anmeldenummer: 18762048.9
(22) Anmeldetag: 23.08.2018
(51) Int. Cl.: F16K 1/22, F16K 1/226, F16K 27/02, F16K 11/052

(54) **FLUID-UMSCHALTER UND VERFAHREN ZUM HERSTELLEN EINES FLUID-UMSCHALTERS**
FLUID SWITCHOVER DEVICE AND METHOD FOR PRODUCING A FLUID SWITCHOVER DEVICE
PERMUTATEUR DE FLUIDES ET PROCÉDÉ DE FABRICATION D'UN PERMUTATEUR DE FLUIDES

(30) Priorität: 29.08.2017 DE 102017215082
(43) Veröffentlichungstag der Anmeldung: 08.07.2020
(73) Patentinhaber: Efficient Energy GmbH, 85622 Feldkirchen (DE)
(72) Erfinder: KNIFFLER, Oliver, 82054 Sauerlach (DE); WINGS, Gerd, 89443 Schwenningen (DE)
(74) Vertreter: Zinkler, Franz
(86) Internationale Anmeldenummer: PCT/EP2018/072794
(87) Internationale Veröffentlichungsnummer: WO 2019/042864

(56) Entgegenhaltungen:
- AU-B2- 438 274
- CN-B- 102 052 483
- US-A- 3 549 123
- US-A- 3 961 405
- US-A1- 2009 050 106

## Beschreibung

Die vorliegende Erfindung bezieht sich auf Fluid-Umschalter und insbesondere auf Fluid-Umschalter mit wenigstens drei Anschlüssen zum Implementieren eines Umschalters, für Gase oder Flüssigkeiten zwischen zwei oder mehr Wegen.

Fluid-Umschalter können z. B. auf der Basis eines Kugelhahns implementiert werden. Alternative Implementierungen für Fluid-Umschalter existieren im Stand der Technik.

So beschreibt die DE4321647 A1 ein Umschalt-Ventil für ein Druckmedium, das ein einstückiges plattenförmiges Gehäuse aufweist, in dessen zylindrischem Gehäuse-Raum ein zylindrischer Schieber schwenkbar angeordnet ist. Im Gehäuse ist eine Ringnut ausgebildet, in die mindestens ein Eingang und mindestens ein Ausgang einmünden. In der Ringnut ist ein Dichtungsring angeordnet, der in einer Stellung, wenn eine Abflachung am Schieber einen Eingang und einen benachbarten Ausgang überbrücken, gegen die Abflachung gedrückt wird, wodurch zwischen der äußeren Begrenzungsfläche der Ringnut und dem Dichtungsring ein Überbrückungsraum gebildet wird. Der nur eine Dichtungsring dient zur Abdichtung der Eingänge und der Ausgänge gegeneinander und zur Abdichtung des Ventils nach außen.

Die WO2008118063 A1 offenbart ein Wegeventil mit einem rotierenden Stellglied, das eine elliptische Form hat und an einer Achse angebracht ist.

Die DE19860637 A1 offenbart ein Mehrwegeventil mit einem zylindrischen Gehäuse und mit einem Dichtungsteller, der an einer Rille befestigt ist, und der den Zylinder in mindestens zwei Teilräume aufteilt. Der Teller ist dabei schräg angeordnet und ellipsenförmig und ist an seinem Umfang mit einer Nut versehen, in welcher ein O-Ring angebracht ist.

Die US3951381 offenbart Scheibenkörper, welche eine Nut entlang ihrer Umfangsfläche aufweisen. In der Nut ist ein O-Ring eingebracht.

Die DE102005031962 A1 offenbart ein Mehrwegeventil für Heizungs- und/oder Warmwasseranlagen mit einem Ventilgehäuse, wobei das Ventilgehäuse Zu- und Abläufe aufweist. Im Ventilgehäuse ist ein Drehschieber angeordnet, der drehbar in dem Ventilgehäuse gelagert ist und auf seinem Umfang Steueröffnungen aufweist. In Abhängigkeit der Stellung des Drehschiebers sind die Zu- und Abläufe untereinander verbindbar und/oder trennbar. Ferner ist im Ventilgehäuse eine Hohlformeinsatz drehfest angeordnet, in dem der Drehschieber gleitgelagert ist.

Die CN 102 052 483 B offenbart einen Fluid-Umschalter nach dem Oberbegriff des Anspruchs 1.

Die aus dem Stand der Technik bekannten Umschalter sind je nach Implementierung aufwändig herstellbar und sehr teuer, da sie gegebenenfalls benötigte sehr hohe Anforderungen erfüllen. Wieder andere Umschalter sind zwar weniger aufwändig herstellbar aber zu wenig druckdicht.

Die Aufgabe der vorliegenden Erfindung besteht darin, einen einfach herstellbaren und gleichzeitig betriebssicheren Fluid-Umschalter zu schaffen.

Diese Aufgabe wird durch einen Fluid-Umschalter nach Patentanspruch 1 oder ein Verfahren zum Herstellen eines Fluid-Umschalters nach Patentanspruch 15 gelöst.

Der Fluid-Umschalter umfasst ein Gehäuse mit wenigstens drei Anschlüssen, die in einen Innenraum münden. Ferner ist eine Ventilklappe mit eine Drehachse vorgesehen, wobei die Ventilklappe in dem Gehäuse drehbar angeordnet ist und wobei die Drehachse an einer ersten Stelle an dem Gehäuse angebracht ist und an einer zweiten Stelle ebenfalls an dem Gehäuse angebracht ist. Darüber hinaus ist an der Ventilklappe eine umlaufende Dichtung angebracht, die bei der ersten Stelle einen ersten Ausweichabschnitt und bei der zweiten Stelle einen zweiten Ausweichabschnitt aufweist, wobei der erste Ausweichabschnitt und der zweite Ausweichabschnitt ausgebildet sind, um der Drehachse auf derselben Seite der Ventilklappe auszuweichen. Darüber hinaus ist die Ventilklappe so ausgebildet, dass sie über die umlaufende Dichtung die Begrenzung des Innenraums rutschend in Eingriff nimmt, so dass bei einer ersten Position der Ventilklappe ein erster Ausgang mit einem zweiten Ausgang verbunden ist und der erste Ausgang von einem dritten Ausgang abgedichtet ist, und dass bei einer zweiten Position der erste Ausgang mit dem dritten Ausgang verbunden ist und der erste Ausgang von dem zweiten Ausgang abgedichtet ist.

Die umlaufende Dichtung, die eine Begrenzung des Innenraums rutschend in Eingriff nimmt, stellt sicher, dass unabhängig von der Position der Ventilklappe immer eine Abdichtung geschaffen wird zwischen einem ersten Bereich des Innenraums, in den zwei Anschlüsse münden und einem zweiten Bereich des Innenraums, in den der wenigstens eine Anschluss und vorzugsweise die beiden anderen Anschlüsse münden, wenn der Fluid-Umschalter als 2-Wege-Schalter mit vier Anschlüssen ausgebildet ist. Wie bei einer Ausbildung mit drei Anschlüssen kann z. B. ein Eingang mit zwei Ausgängen fluiddicht gekoppelt werden, oder kann ein Ausgang mit zwei Eingängen fluiddicht gekoppelt werden.

Die umlaufende Dichtung stellt sicher, dass die beiden Strömungswege getrennt werden. Damit die Dichtung den einen Strömungsweg von dem anderen Strömungsweg dicht trennt, weicht sie an den beiden Ausweichabschnitten der Drehachse auf der gleichen Strömungsseite, also bezüglich der gleichen Seite der Ventilklappe aus und stellt dadurch in beiden Schalterstellungen eine umlaufende Dichtung dar.

Vorzugsweise dient der Fluid-Umschalter der vorliegenden Erfindung einer Umschaltung von Flüssigkeitsströmen in einer Situation mit Unterdruck, also typischerweise in einem Grobvakuum, wie es vorhanden ist, wenn eine Wärmepumpe betrachtet wird, die mit Wasser als Wärmepumpenmedium betrieben wird, wie sie beispielsweise in der DE102012208174 B4 beschrieben wird, wo 2-Wege-Schalter eingesetzt werden um zwischen einem Wärmepumpen-Normalmodus und einem Freikühlungsmodus hin- und herzu schalten.

Die vorliegende Erfindung ist ferner dahin gehend vorteilhaft, dass beim Umschalten von zwei Eingängen auf zwei Ausgänge durch Vertauschen der Eingänge oder Ausgänge dennoch eine Vakuumdichtheit bezüglich des umgebenden Luftdrucks beibehalten wird, und wobei ferner eine Strömungsdichtheit der beiden Volumenströme erreicht wird, die womöglich nicht immer 100%ig gegeben ist, die jedoch eine Strömungsdichtheit erreicht, die höher als 10 ml pro Minute Unddichtheit ist.

Erfindungsgemäß wird bei der vorliegenden Erfindung eine Ventilklappe eingesetzt, die mit der umlaufenden Dichtung versehen ist, die als Standard-O-Ring ausgebildet ist. Die umlaufende Dichtung trennt den Strömungsraum auf der einen Seite der Ventilklappe von einem Strömungsraum auf der anderen Seite der Ventilklappe und wirkt dabei selbstzentrierend. Die Ventilklappe ist ferner drehbar gelagert, um je nach Ausführungsform im Bedarfsfall um ca. 90 Grad gedreht zu werden, um dadurch einen anderen Ausgang mit einem Eingang bzw. einen anderen Eingang mit einem Ausgang zu verbinden.

Erfindungsgemäß wird ein Fluid-Umschalter erhalten, der keinerlei spezielle aufwendig zu fertigende Formdichtung benötigt, sondern bei dem sämtliche Dichtungen als übliche preisgünstig herstellbare und dennoch betriebssichere O-Ring-Dichtungen ausführbar sind.

Darüber hinaus wird die Ventilklappe über die Drehachse geführt, und zwar über die Anbringung an der ersten und an der zweiten Stelle. Ferner wird eine Einfachheit der Konstruktion erreicht, indem ein Aufbaukonzept bereitgestellt wird, bei dem sowohl bezüglich des Gehäuses als auch bezüglich der einzelnen Komponenten der Mehrkomponenten-Ventilklappe eine möglichst große Gleichheit der Teile angestrebt wird.

Darüber hinaus wird Verschleiß vermieden, indem dort, wo die umlaufende Dichtung rutschend den Innenraum in Eingriff nimmt, lediglich stumpfe Winkel vorhanden sind, die durch spezielle Abfasungen hergestellt werden. Die O-Ring-Dichtung, die umlaufend an der Ventilklappe angeordnet ist und an den beiden Ausweichabschnitten der Drehachse ausweicht, ermöglicht das selbstzentrierende Konzept. Die beiden Strömungsräume werden dabei durch das Vorbeiführen der O-Ring-Dichtung an der Quelle auf jeweils der gleichen Seite unter Verwendung der beiden Ausweichabschnitte erhalten. Dadurch wird unabhängig von der Position der Ventilklappe bezüglich des Innenraums eine Leckage über die durchgeführte Welle in dem Strömungsraum vermieden.

Die vorliegende Erfindung ist nicht nur als Umschalter in Verbindung mit der beschriebenen Wärmepumpe anwendbar, um von einem Normalmodus in einen Freikühlungsmodus oder einen anderen Modus der Wärmepumpe umzuschalten, sondern die vorliegende Erfindung ist für sämtliche Anwendungen verwendbar, wo es wenigstens drei und vorzugsweise vier Anschlüsse gibt, und wo insbesondere zwei Eingänge existieren und zwei Ausgänge existieren und Fluidströme zwischen Quellen und Senken umgeschaltet werden müssen, wobei die Quellen und Senken Flüssigkeitsquellen oder Gasquellen bzw. Flüssigkeitssenken und Gassenken sein können.

Bevorzugte Ausführungsbeispiele der vorliegenden Erfindung werden nachfolgend Bezug nehmend auf die beiliegenden Zeichnungen detailliert erläutert. Es zeigen:
- Fig. 1: eine schematische dreidimensionale Ansicht eines Fluid-Umschalters gemäß einem Ausführungsbeispiel;
- Fig. 2: eine Draufsicht auf einen Fluid-Umschalter gemäß einem Ausführungsbeispiel;
- Fig. 3: eine Schnittdarstellung durch den Fluid-Umschalter von Fig. 2;
- Fig. 4: eine Detaildarstellung der oberen Stelle, an der die Drehachse gelagert ist, wobei insbesondere der Ausweichabschnitt hervorgehoben ist;
- Fig. 5: eine Explosionszeichnung einer bevorzugten Ausführungsform der Ventilklappe mit gleichen Teilen für die Oberseite und die Unterseite;
- Fig. 6: eine Darstellung von zwei alternativen Zusammenbauweisen für die Ventilklappe;
- Fig. 7: eine Situation des Zusammenbaus der Ventilklappe, bevor das zweite Ventilklappenteil mit dem ersten Ventilklappenteil verbunden wird, wobei jedoch die Umlaufdichtung und die Welle mit Passstiften eingesetzt sind; und
- Fig. 8: eine schematische Darstellung eines möglichen Zusammenbaus der beiden Ventilklappenteile.

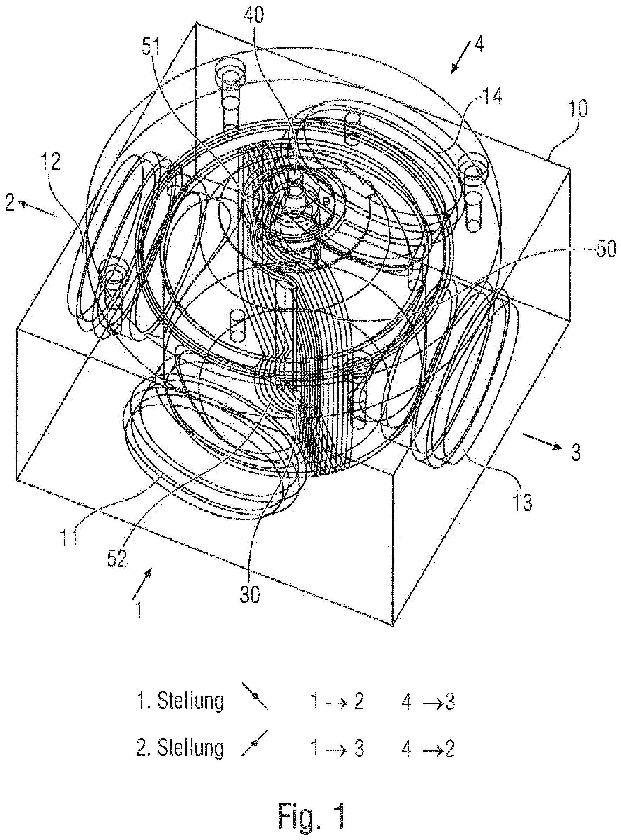

Fig. 1 zeigt einen Fluid-Umschalter mit einem Gehäuse 10 mit wenigstens drei Anschlüssen 11, 12, 13, 14. Insbesondere ist bei dem in Fig. 1 gezeigten Ausführungsbeispiel der erste Anschluss 11 ein Eingang 1 und der zweite Anschluss 12 ein Ausgang 2. Darüber hinaus ist der dritte Anschluss 13 ein Ausgang 3 und ist der vierte Anschluss 14 ein Eingang 4. Bei der in Fig. 1 gezeigten Stellung einer Ventilklappe 30 ist der erste Eingang 11 mit dem ersten Ausgang 12 verbunden und ist der zweite Eingang 14 mit dem dritten Anschluss 13 verbunden. Bei einer zweiten Stellung der Ventilklappe 30, zu der die Ventilklappe z. B. durch einen Stellmotor oder durch manuelle Betätigung oder durch eine wie auch immer geartete Aktorvorrichtung gebracht werden kann, würde dann der erste Anschluss 11 als erster Eingang mit dem dritten Anschluss 13 als erstem Ausgang verbunden sein und würde der zweite Eingang 14 mit dem zweiten Ausgang 12 verbunden sein.

Der Fluid-Umschalter könnte jedoch auch als 3-Anschluss-Umschalter ausgebildet sein, um z. B. den ersten Eingang 1 in der in Fig. 1 gezeigten Stellung mit dem ersten Ausgang 2 bzw. dem Anschluss 12 zu verbinden, und um in der zweiten Stellung den ersten Eingang 1 bzw. den Anschluss 11 mit dem zweiten Ausgang 3 bzw. dem Anschluss 13 zu verbinden. Somit wäre mit lediglich drei Anschlüssen ein Umschalter implementiert, um einen Eingang mit entweder einem ersten Ausgang oder einem zweiten Ausgang zu verbinden.

Genauso könnte der Umschalter auch dazu verwendet werden, um einen Ausgang mit entweder einem ersten Eingang oder einem zweiten Ausgang zu verbinden.

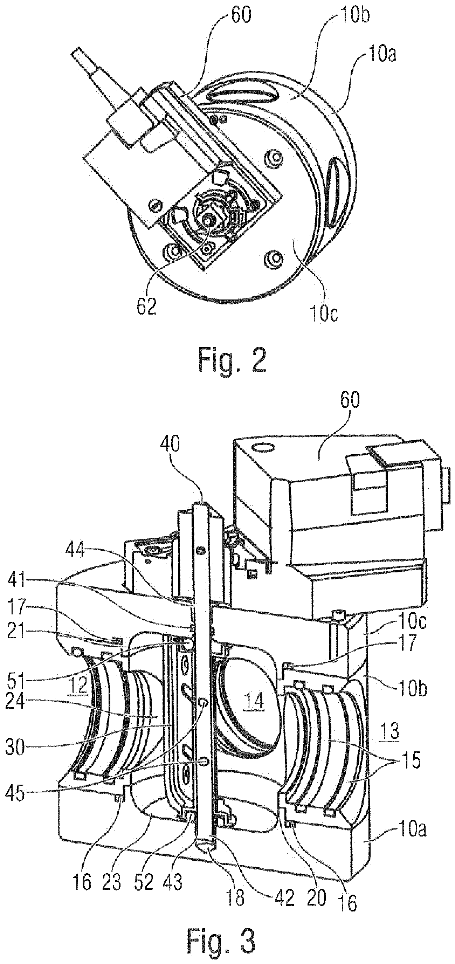

Insbesondere ist die Ventilklappe 30 mit der Drehachse 40 versehen, wobei die Ventilklappe in dem Gehäuse 10 drehbar angeordnet ist, und wobei die Drehachse 40 an einer ersten Stelle 41 (in Fig. 3) an dem Gehäuse 10 angebracht ist und an einer zweiten Stelle (42 in Fig. 3) ebenfalls an dem Gehäuse 10 angebracht ist. Ferner ist die Ventilklappe 30 mit einer umlaufenden Dichtung 50 versehen, die an der Ventilklappe 30 angebracht ist und die ausgebildet ist, um eine Begrenzung des Innenraums rutschend in Eingriff zu nehmen, so dass die Verbindungen der Eingänge/Ausgänge erreichbar ist, wie es in Fig. 1 unten dargestellt ist. Die Dichtung hat an der ersten Stelle 41 (Fig. 3) einen ersten Ausweichabschnitt 51 und an der zweiten Stelle 42 (Fig. 3) einen zweiten Ausweichabschnitt 52, wobei der erste Ausweichabschnitt und der zweite Ausweichabschnitt ausgebildet sind, um der Drehachse 40 auf derselben Seite bezüglich der Ventilklappe, also bei der in Fig. 1 gezeigten Stellung auf der linken Seite auszuweichen.

Sowohl der erste Ausweichabschnitt 51 als auch der zweite Ausweichabschnitt 52 verlaufen bezüglich der Ansicht in Fig. 1 also auf derselben Seite und nicht etwa so, dass z. B. der erste Ausweichabschnitt 51 links von der Welle in Fig. 1 verlaufen würde und der zweite Ausweichabschnitt rechts von der Welle verlaufen würde. Gerade diese Ausführung wird vermieden, weil damit, um den ersten Strömungsraum von dem zweiten Strömungsraum abzudichten, eine weitere Abdichtung der Welle nötig wäre. Diese kann jedoch erfindungsgemäß vermieden werden, und zwar durch die nicht-symmetrische Anordnung der umlaufenden Dichtung, bei der die beiden Ausweichabschnitte auf derselben Seite der Drehachse 40 ausweichen, wobei dennoch eine durchgehend umlaufende Dichtung bereitgestellt wird.

Fig. 2 zeigt eine schematische Ansicht des Fluid-Umschalters gemäß einem bevorzugten Ausführungsbeispiel der vorliegenden Erfindung, bei der der Fluid-Umschalter wie in Fig. 1 als 2-Wege-Schalter ausgebildet ist.

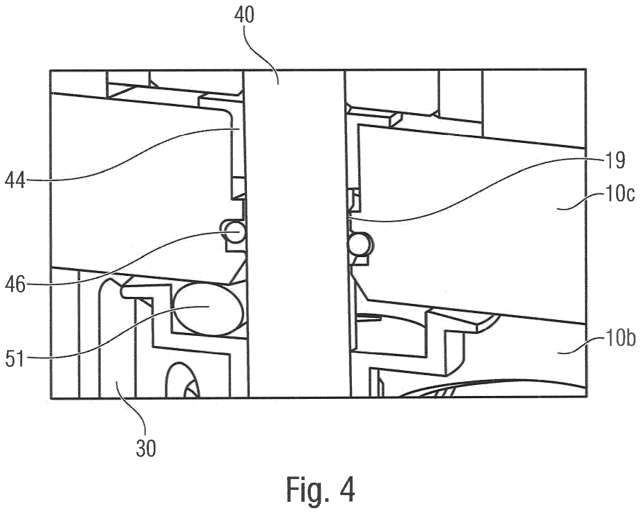

Es ist eine Antriebsvorrichtung 60 bzw. eine Betätigervorrichtung vorgesehen, die ausgebildet ist, um ein Drehmoment an die Drehachse 40 anzulegen. Ferner ist in Fig. 2 dargestellt, dass der gesamte Fluid-Umschalter durch drei Teile implementiert werden kann, nämlich einem Bodenteil bzw. einer Unterseite 10a, einem Einsatz- bzw. Abstandshalter 10b und einem Deckel bzw. einer Oberseite 10c. Vorzugsweise sind der Deckel 10c und der Boden 10a als gleiche Teile ausgebildet, wobei jedoch, wie es in Fig. 3 gezeigt ist, der Deckel 10c ein Durchgangsloch 19 hat, das detaillierter auch in Fig. 4 gezeigt ist, während der Boden 10a ein Sackloch 18 aufweist. Ansonsten sind der Deckel 10c und der Boden 10a bzw. die Oberseite und die Unterseite als gleiche Teile ausgebildet.

Wie es in Fig. 2 gezeigt ist, führt die Drehmomentübertragung vom Betätiger 60 auf die Welle über einen Schraubenkopf 62 statt. Bei einem alternativen Ausführungsbeispiel kann jedoch der Antrieb bezüglich der Darstellung in Fig. 2 um 45 Grad verdreht werden, dadurch entfällt die Senkung der Verbindungsschrauben und es kann ebenfalls eine Drehmomentübertragung stattfinden. Der Antrieb kann je nach Implementierung als elektrischer, mechanischer, fluidischer oder pneumatischer Antrieb ausgebildet sein, um die Ventilklappe bezüglich des Innenraums zu verdrehen, um entweder die erste Stellung oder die zweite Stellung der Ventilklappe bezüglich des Innenraums zu erreichen, wie es in Fig. 1 schematisch dargestellt ist.

Fig. 3 zeigt einen Querschnitt durch den Fluid-Umschalter von Fig. 2, wobei der linke Anschluss 12 links in Fig. 3 gezeigt ist, und der rechte Anschluss 13 in Fig. 3 gezeigt ist und auch der hintere Anschluss 14. Der vordere Anschluss 11 ist jedoch bei dem Schnitt in Fig. 3 gewissermaßen "weggeschnitten".

Darüber hinaus ist die Ventilklappe 30 dargestellt, in der die Drehachse 40 enthalten ist. Außerdem sind die beiden Ausweichabschnitte 51, 52 gezeigt, die bei dem in Fig. 3 gezeigten Ausführungsbeispiel in der in Fig. 3 gezeigten Ansicht links bzw. auf der linken Seite der Ventilklappe der Drehachse 40 ausweichen und beide auf derselben Seite bezüglich der Drehachse auf der Ventilklappe verlaufen.

Ferner ist gezeigt, dass die Unterseite 10a über einen O-Ring 16 von dem Mittelteil bzw. Einsatz 10b abgedichtet ist. Der O-Ring schafft also die Abdichtung zwischen der Unterseite 10a und dem Einsatz 10b, und die Innenkonturen der Unterseite 10a und des Einsatzes 10b sowie der Oberseite 10c bilden den Innenraum, in dem die Ventilklappe 30 gedreht wird, und in dem die umlaufende Dichtung rutschend in Eingriff nimmt, wenn die Drehachse 40 betätigt wird. Der O-Ring 16 ist um einen Vorstand 20 angebracht. Insbesondere bildet der Vorstand 20 mit einer entsprechenden nahezu formschlüssigen Nut mit dem Einsatz 10b eine stabile und dichte Verbindung, zumal vorzugsweise in dem Schalter ein Unterdruck herrscht und damit der Luftdruck von außen das Mittelteil 10b auf den Vorstand 20 drückt. Eine entsprechende Konstruktion befindet sich ebenfalls am Oberteil, wo ebenfalls ein Vorstand 21 ausgebildet ist, an den eine Nut des Mittelteils 10b wiederum aufgrund des Luftdrucks gedrückt wird, wenn der Schalter vorzugsweise einen Unterdruck im Innenraum hat. Hat der Schalter jedoch keinen Unterdruck im Innenraum, so kann die formschlüssige stabile Verbindung auch dadurch erreicht werden, dass entsprechend die Schrauben o der sonstige Befestigungsmittel vorgesehen werden.

Darüber hinaus umfasst der Mittelteil in jedem Anschluss zwei Nuten, in denen jeweils ein O-Ring angebracht ist. Diese Doppeldichtung 15 ermöglicht einen einfachen Rohranschluss. Man muss lediglich ein Rohr in den Anschluss einstecken und damit ist die Dichtigkeit erreicht, insbesondere auch aufgrund der Tatsache, dass vorzugsweise in dem Schalter und damit auch in den Anschlussleitungen Unterdruck herrscht.

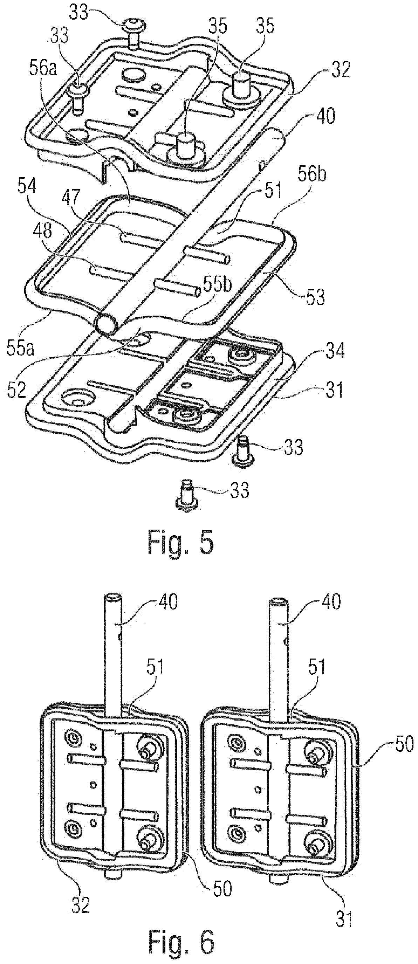

Ferner ist die Drehachse 40 bzw. Welle als einfaches Drehteil mit zwei bis drei Bohrungen 45 für Passstifte ausgebildet, um eine Drehmomentübertragung auf die Ventilklappe 30 zu schaffen, wie es nachfolgend noch Bezug nehmend auf Fig. 5 detaillierter dargestellt wird. Insbesondere ist die Drehachse 40 oben mit einem gekanteten Außenprofil versehen, wie beispielsweise einen Dreikant, einen Vierkant oder z. B. auch mit einem Sechskant, um eine stabile mechanische und formschlüssige Drehmomentübertragung auf die Drehachse zu erreichen.

Die umlaufende Dichtung 50 mit den beiden Ausweichabschnitten 51, 52 ist als O-Ring ausgebildet und liegt umlaufend auf einer Seite und dichtet so den Strömungsraum komplett ab.

Ferner ist die Kontur des Innenraums mit abgerundeten Ecken 23 versehen. Diese umlaufend gerundete Dichtkontur 23 erlaubt den Einsatz eines Standard-O-Rings als umlaufende Dichtung und ermöglicht eine gewissermaßen selbstzentrierende Ventilklappe, da die Ventilklappe 30 die umlaufend gerundete Dichtkontur, also die Oberseite des Innenraums rutschend in Eingriff nimmt. Darüber hinaus ist an den Mündungen der Anschlüsse jeweils eine Fase 24 vorgesehen, um einen sanften, stumpfen Übergang beim Umschalten zu erreichen, der zu einer minimalen O-Ring-Beanspruchung führt, selbst wenn die Ventilklappe 30 relativ schnell bewegt wird, um von der ersten Stellung in die zweite Stellung und umgekehrt zu kommen. Bei einer solchen Bewegung überstreicht die Ventilklappe nämlich diese Fase und wird jedoch aufgrund des sanften/stumpfen Winkels kaum oder nicht abgerieben.

Fig. 4 zeigt einen detaillierteren Ausschnitt des oberen Abschnitts bzw. der Stelle 41 der Drehachse 40 an. Insbesondere ist die Drehachse 40 durch das Durchgangsloch 19 durch den oberen Bereich 10c durchgeführt, der auf dem mittleren Bereich bzw. Einsatz 10b aufliegt. Der obere Ausweichabschnitt 51 der umlaufenden Dichtung, die an der Ventilklappe 30 angeordnet ist, liegt an der unteren Oberfläche der Oberseite 10c an, welche die Innenraumkontur bildet und dichtet somit den einen Strömungsraum vom anderen Strömungsraum ab. Darüber hinaus ist ein O-Ring 46 in einer O-Ring-Einfassung in der Oberseite 10 enthalten, um die Drehachse 40 nach außen abzudichten. Ferner wird die Drehachse 40 über eine Bundbuchse 44 als Gleitlager an der Oberseite 10c gelagert. Die Ventilklappe 30 ist somit durch die umlaufende Dichtung radial und axial selbstzentriert und dichtet die beiden Strömungsräume gegeneinander ab.

Es sei ferner darauf hingewiesen, dass nicht nur an der ersten Stelle 41, sondern auch an der zweiten Stelle 42 eine Bundbuchse als Gleitlager vorgesehen ist, wie es bei 43 in Fig. 3 gezeigt ist.

Aus Fig. 2, 3 und 4 ist ersichtlich, dass sämtliche Dichtungen als übliche, preisgünstige und einfach herstellbare O-Ring-Dichtungen ausgeführt sind, so dass keine Spezial-Formdichtungen entworfen und eingesetzt werden müssen. Stattdessen können lediglich Normteile verwendet werden.

Fig. 5 zeigt eine Explosionszeichnung der Ventilklappe. Insbesondere besteht die Ventilklappe aus einem Unterteil 31 und einem Oberteil 32. Dazwischen die Welle 40 angeordnet, die mit zwei Passstiften 47, 48 versehen ist, die durch die Bohrungen 45 für die Passstifte verlaufen. Außerdem werden die beiden Ventilklappenteile 31, 32 durch jeweilige Schrauben 33 miteinander verschraubt, wobei die Schraubenenden dicht umschlossen sind, wie es bei 35 gezeigt ist. Die Ventilklappe ist somit selbst fluiddicht. Die umlaufende Dichtung 50 wird dabei in einen Dichtungshalterabschnitt 34 eines Ventilklappenteils, wie beispielsweise 31 eingelegt. Anschließend wird die Welle mit den Passstiften aufgelegt, um dann schließlich das Oberteil 32 darauf zu setzen und zu verbinden, wie beispielsweise mit den Schrauben. Alternativ oder zusätzlich können die beiden Ventilklappenteile auch geklebt werden. Auf jeden Fall sind dann, wenn Schrauben verwendet werden, die Schraubenenden dicht umschlossen, wie es bei 35 gezeigt ist.

Die umlaufende Dichtung umfasst bei dem in Fig. 5 gezeigten Ausführungsbeispiel zwei lange gerade Seiten 53, 54, jeweils zwei kurze gerade Seiten 55a, 55b, die an den zweiten Ausweichabschnitt 52 angrenzen, sowie zwei weitere kurze Seiten 56a, 56b, die an den ersten Ausweichabschnitt 51 angrenzen. Insbesondere sind die kurzen geraden Abschnitte 55b, 56b mit dem einen langen geraden Abschnitt 53 der umlaufenden Dichtung verbunden, und sind die anderen kurzen geraden Abschnitte 55a, 56a mit dem anderen geraden langen Abschnitt 54 der umlaufenden Dichtung verbunden. Damit wird eine Ventilklappe erreicht, die eine flache Form hat und an ihren Stirnseiten, also den kleinen Seitenflächen die O-Ring-Dichtung bzw. die umlaufende Dichtung trägt, wobei die beiden Ausweichabschnitte 51, 52 jeweils auf derselben Seite bezüglich der Achse oder bezüglich der Ventilklappe der Achse ausweichen. Dazu haben die beiden Ventilklappenteile 31, 32 jeweils eine Dichtungsführung für den Ausweichabschnitt, wobei jedoch lediglich in dem entsprechenden Ausweichabschnitt eines Ventilklappenteils die umlaufende Dichtung verläuft, während die Führungen für die Ausweichabschnitte des anderen Teils der Ventilklappe nicht von der umlaufenden Dichtung durchlaufen werden. Dies ist beispielsweise deutlich in Fig. 6 zu sehen, in der zwei verschiedene Zusammenbauvarianten gezeigt sind, nämlich zum einen dass die beiden Ausweichabschnitte auf der Unterseite verlaufen, also auf der Seite der Ventilklappe, die mit 31 bezeichnet ist, während rechts in Fig. 6 die beiden Ausweichabschnitte auf der anderen Seite der Ventilklappe verlaufen, also der Seite, die mit dem Teil 32 in Fig. 5 bezeichnet ist. Beide Alternativen sind gleichwertig ausführbar.

Dies ist besonders dahin gehend vorteilhaft, dass die Ventilklappe vorzugsweise aus zwei gleichen Teilen 31, 32 besteht. Zusätzlich zum Verkleben können die beiden Teile, wie bereits dargestellt wurde, verschraubt werden, wobei die Schraubenenden dicht umschlossen sind.

Die umlaufende Dichtung, die vorzugsweise als umlaufender O-Ring ausgebildet ist, geht immer auf der gleichen Seite um die Welle, um beide Strömungsräume sicher voneinander zu trennen und um insbesondere keine Leckage über die Welle zu ermöglichen. Die einzige Abdichtung der Welle findet zur Umgebung hin statt, und zwar durch den O-Ring 46, während unten keine Abdichtung der Welle nötig ist, weil das Loch 18 lediglich ein Sackloch ist und damit bereits das Unterteil 10a eine ausreichende Abdichtung nach außen liefert, da das Sackloch 18 keine Kommunikation mit der äußeren Umgebung ermöglicht.

Die Drehmomentübertragung findet, wie bereits dargestellt worden ist, durch die beiden Passstifte 47, 48 statt, die in die Ventilklappe eingelegt sind. Es können jedoch beliebige alternative Drehmomentübertragungen erreicht werden, wie beispielsweise entsprechende Nuten oder etwas Ähnliches, um eine sichere Kraftübertragung von der Drehachse 40 auf die Ventilklappe zu erreichen.

Bei alternativen Ausführungsbeispielen kann die Ventilklappe somit auch direkt um die Welle durch Spritzguss auf/um die Welle gespritzt werden. Die O-Ring-Nut bzw. die Halterung 34 für die umlaufende Dichtung würde dann durch eine Schiebertechnik im Werkzeug realisiert werden.

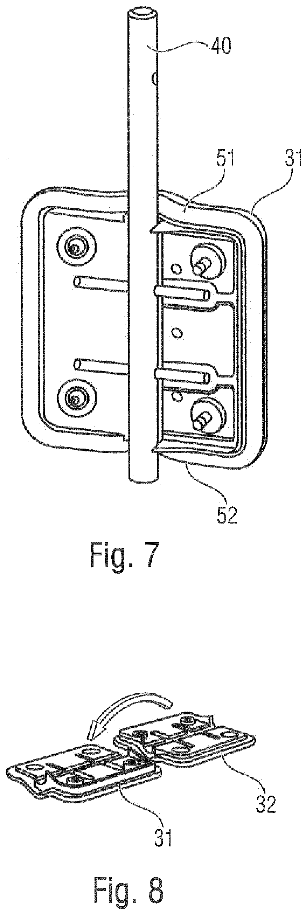

Fig. 7 zeigt einen Zwischenzustand beim Zusammenbau der Ventilklappe, bei dem bereits die Welle 40 mit den beiden Passstiften 47, 48 auf dem Ventilteil 31 aufgesetzt ist. Insbesondere wurde die Welle mit den Passstiften aufgesetzt, nachdem die umlaufende Dichtung 50 mit den beiden Ausweichabschnitten 51, 52 in die entsprechende Nut 34 des Teils 31 eingesetzt worden ist.

Um die Ventilklappe fertigzustellen, ist dann lediglich noch, wie es in Fig. 8 gezeigt ist, das Oberteil 32 auf die in Fig. 7 gezeigte Anordnung darauf zu setzen, die Teile miteinander zu verschrauben und/oder zu verkleben.

### Bezugszeichenliste

- 1: erster Eingang
- 2: erster Ausgang
- 3: zweiter Ausgang
- 4: zweiter Eingang
- 10: Gehäuse
- 10a: Unterseite
- 10b: Mittelteil bzw. Einsatz
- 10c: Oberseite
- 11: erster Anschluss
- 12: zweiter Anschluss
- 13: dritter Anschluss
- 14: vierter Anschluss
- 15: O-Ring-Doppeldichtung
- 16: O-Ring
- 17: O-Ring
- 20: Vorstand für O-Ring
- 21: Vorstand für O-Ring
- 17: O-Ring
- 18: Sackloch
- 19: Durchgangsloch
- 23: abgerundete Ecke des Innenraums
- 24: Fase
- 30: Ventilklappe
- 31: Unterteil der Ventilklappe
- 32: Oberteil der Ventilklappe
- 33: Schrauben
- 34: Aufnahme für umlaufende Dichtung
- 35: Schraubenenden
- 40: Drehachse
- 41: erste Stelle
- 42: zweite Stelle
- 43: Lagerbuchse
- 44: Lagerbuchse
- 45: Passstiftbohrung
- 46: O-Ring
- 47: Passstift
- 48: Passstift
- 50: umlaufende Dichtung
- 51: erster Ausweichabschnitt
- 52: zweiter Ausweichabschnitt
- 53: langer gerader Abschnitt
- 54: weiterer langer gerader Abschnitt
- 55a: kurzer gerader Abschnitt am zweiten Ausweichabschnitt
- 55b: weiterer kurzer Abschnitt am zweiten Ausweichabschnitt
- 56a: kurzer gerader Abschnitt am ersten Ausweichabschnitt
- 56b: weiterer kurzer gerader Abschnitt am ersten Ausweichabschnitt
- 60: Betätiger
- 62: Schraubenkopf

## Patentansprüche

1. Fluid-Umschalter mit folgenden Merkmalen:
einem Gehäuse (10) mit wenigstens drei Anschlüssen (11, 12, 13, 14), die in einen Innenraum des Gehäuses (10) münden;
einer Ventilklappe (30) mit einer Drehachse (40), wobei die Ventilklappe (30) in dem Gehäuse (10) drehbar angeordnet ist, und wobei die Drehachse (40) an einer ersten Stelle (41) an dem Gehäuse (10) angebracht ist und an einer zweiten Stelle (42) an dem Gehäuse (10) angebracht ist; und
einer umlaufenden Dichtung (50), die an der Ventilklappe (30) angebracht ist, die bei der ersten Stelle (41) einen ersten Ausweichabschnitt (51) und bei der zweiten Stelle (42) einen zweiten Ausweichabschnitt (52) aufweist, wobei der erste Ausweichabschnitt (51) und der zweite Ausweichabschnitt (52) ausgebildet sind, um der Drehachse (40) auf derselben Seite der Ventilklappe (30) auszuweichen, und
wobei die Ventilklappe (30) ausgebildet ist, um über die umlaufende Dichtung (50) eine Begrenzung des Innenraums des Gehäuses (10) rutschend in Eingriff zu nehmen, so dass bei einer ersten Position der Ventilklappe (30) der erste Anschluss (11) mit dem zweiten Anschluss (12) verbunden ist und der erste Anschluss (11) von dem dritten Anschluss (13) abgedichtet ist, und bei einer zweiten Position der Ventilklappe (30) der erste Anschluss (11) mit dem dritten Anschluss (13) verbunden ist und der erste Anschluss (11) von dem zweiten Anschluss (12) abgedichtet ist,
wobei die umlaufende Dichtung (50) über die Ventilklappe (30) vorsteht, um den Innenraum des Gehäuses (10) rutschend in Eingriff zu nehmen, **dadurch gekennzeichnet, dass**
die umlaufende Dichtung (50) ein O-Ring ist, der in einem O-Ring-Halteabschnitt (34) der Ventilklappe (30) gehalten ist, und dass die Ventilklappe (30) ein erstes Ventilklappenteil (31) und ein vom ersten Ventilklappenteil (31) separates zweites Ventilklappenteil (32) aufweist, wobei die umlaufende Dichtung (50) mit dem ersten Ventilklappenteil (31) durchgehend in Berührung ist, wobei die Drehachse (40) zwischen dem ersten Ventilklappenteil (31) und dem zweiten Ventilklappenteil (32) angeordnet ist, und wobei das zweite Ventilklappenteil (32) an dem ersten Ausweichabschnitt (51) und dem zweiten Ausweichabschnitt (52) der umlaufenden Dichtung (50) nicht mit der umlaufenden Dichtung (50) in Berührung ist.

2. Fluid-Umschalter nach Anspruch 1,
bei dem die Ventilklappe (30) eine erste flache Seite (31) und eine zweite flache Seite (32) aufweist, wobei der erste Ausweichabschnitt (51) und der zweite Ausweichabschnitt (52) sich entweder auf der ersten flachen Seite oder auf der zweiten flachen Seite erstrecken, oder
bei dem die Ventilklappe (30) eine Stirnseite aufweist, wobei die umlaufende Dichtung (50) an der Stirnseite der Ventilklappe (30) angebracht ist.

3. Fluid-Umschalter nach einem der vorhergehenden Ansprüche,
bei dem die Drehachse (40) sich mittig in der Ventilklappe (30) erstreckt, so dass ein Bereich der Ventilklappe (30) zwischen der ersten Stelle (41) und einem Rand des Innenraums des Gehäuses (10) zwischen einem ersten Paar von Anschlüssen (11, 13) gleich einem Bereich der Ventilklappe (30) zwischen der ersten Stelle (41) und einem Rand des Innenraums des Gehäuses (10) zwischen einem zweiten Paar von Anschlüssen (12, 14) ist, wobei in dem zweiten Paar von Anschlüssen (12, 14) wenigstens ein Anschluss unterschiedlich ist zu den Anschlüssen des ersten Paars von Anschlüssen (11, 13).

4. Fluid-Umschalter nach einem der vorhergehenden Ansprüche,
bei dem die Ventilklappe (30) eine flache Form hat und vier Stirnseiten hat, wobei die Drehachse (40) von einer ersten Stirnseite und von einer zweiten Stirnseite vorsteht,
wobei die umlaufende Dichtung (50) an der dritten Stirnseite und der vierten Stirnseite der Ventilklappe (30) jeweils einen geraden Abschnitt (53, 54) aufweist, wobei der erste Ausweichabschnitt (51) und der zweite Ausweichabschnitt (52) an der ersten und der zweiten Stirnseite angebracht sind, und über einen jeweils geraden Abschnitt (56a, 56b, 55a, 55b) mit dem geraden Abschnitt (53, 54) an der dritten bzw. vierten Stirnseite verbunden sind.

5. Fluid-Umschalter nach Anspruch 1,
bei dem das erste Ventilklappenteil (31) und das zweite Ventilklappenteil (32) gleich ausgebildet sind,
bei dem das erste Ventilklappenteil (31) mit dem zweiten Ventilklappenteil (32) verschraubt oder verklebt ist und die Drehachse (40) zwischen dem ersten Ventilklappenteil (31) und dem zweiten Ventilklappenteil (32) aufgenommen ist, wobei Schraubenenden (25) abgedichtet sind, oder
wobei mit der Drehachse (40) wenigstens ein Passstift (47, 48) verbunden ist, der an der Drehachse (40) befestigt ist oder sich durch eine Bohrung (45) in der Drehachse (40) erstreckt, wobei der wenigstens eine Passstift (47, 48) zwischen dem ersten Ventilklappenteil (31) und dem zweiten Ventilklappenteil (32) angeordnet ist.

6. Fluid-Umschalter nach einem der vorhergehenden Ansprüche,
der als 2-Wege-Schalter ausgebildet ist, der vier Anschlüsse (11, 12, 13, 14) aufweist, wobei die vier Anschlüsse (11, 12, 13, 14) so angeordnet sind, dass bei der ersten Stellung der Ventilklappe (30) der erste Anschluss (11) mit dem zweiten Anschluss (12) verbunden ist und der dritte Anschluss (13) mit dem vierten Anschluss (14) verbunden ist, und dass bei der zweiten Stellung der Ventilklappe (30) der erste Anschluss (11) mit dem dritten Anschluss (13) verbunden ist und der zweite Anschluss (12) mit dem vierten Anschluss (14) verbunden ist.

7. Fluid-Umschalter nach Anspruch 6,
bei dem der Innenraum des Gehäuses (10) zylindrisch ist, und die vier Anschlüsse (11, 12, 13, 14) so in dem Gehäuse (10) angeordnet sind, dass sie in den Innenraum des Gehäuses (10) münden, wobei ein Winkel zwischen zwei Mündungsmittelpunkten von zwei benachbarten Anschlüssen der vier Anschlüsse (11, 12, 13, 14) zwischen 70 Grad und 110 Grad liegt.

8. Fluid-Umschalter nach einem der vorhergehenden Ansprüche,
bei dem sich die Drehachse (40) an der ersten Stelle (41) durch das Gehäuse (10) erstreckt und durch eine Dichtung (46) zur Umgebung des Fluid-Umschalters abgedichtet ist, und bei der sich die Drehachse (40) an der zweiten Stelle (42) nicht durch das Gehäuse (10) erstreckt, sondern über ein Sackloch (18) in dem Gehäuse (10) gehalten wird.

9. Fluid-Umschalter nach einem der vorhergehenden Ansprüche, der eine Aktorvorrichtung (60) aufweist, um die Drehachse (40) abhängig von einem Ansteuersignal zu betätigen, um die Ventilklappe (30) zwischen der ersten Position und der zweiten Position zu drehen.

10. Fluid-Umschalter nach einem der vorhergehenden Ansprüche,
bei dem das Gehäuse (10) einen Einsatz (10b) aufweist, der durch eine O-Ring-Dichtung (17) zu einer Oberseite (10c) des Gehäuses (10) abgedichtet ist, oder der durch eine O-Ring-Dichtung (16) zu einer Unterseite (10a) des Gehäuses (10) abgedichtet ist, wobei der Einsatz (10b) für einen Anschluss der wenigstens drei Anschlüsse (11, 12, 13, 14) eine Doppel-O-Ring-Dichtung (15) aufweist, um ein an dem Anschluss der wenigstens drei Anschlüsse (11, 12, 13, 14) anzuschließendes Rohr flüssigkeitsdicht zu halten.

11. Fluid-Umschalter nach einem der vorhergehenden Ansprüche,
bei dem das Gehäuse (10) eine Unterseite (10a), eine Oberseite (10c) und einen Einsatz (10b) aufweist, wobei in dem Einsatz (10b) die wenigstens drei Anschlüsse (11, 12, 13, 14) ausgebildet sind und der Einsatz (10b) zwischen der Oberseite (10c) und der Unterseite (10a) zusammen mit der Oberseite und der Unterseite den Innenraum des Gehäuses (10) definiert, wobei eine Mündung eines Anschlusses der wenigstens drei Anschlüsse (11, 12, 13, 14) in dem Einsatz jeweils mit einer Fase (24) versehen ist, so dass ein Verschleiß durch die rutschende Ineingriffnahme an der umlaufenden Dichtung (50) reduziert oder eliminiert ist.

12. Fluid-Umschalter nach Anspruch 10 oder 11,
bei dem die Unterseite (10c) ein Sackloch (18) für die Aufnahme der Drehachse (40) an der zweiten Stelle (42) aufweist,
bei dem die Oberseite (10c) ein Durchgangsloch (19) für die Aufnahme der Drehachse (40) an der ersten Stelle (41) aufweist, und
bei dem die Unterseite (10a) und die Oberseite (10c) ansonsten gleich ausgebildet sind.

13. Fluid-Umschalter nach einem der vorhergehenden Ansprüche,
bei dem die Ventilklappe (30) im Wesentlichen aus Kunststoff gebildet ist,
bei dem die Drehachse (40) im Wesentlichen aus Metall gebildet ist, und bei dem die umlaufende Dichtung (50) aus einem Gummimaterial gebildet ist.

14. Fluid-Umschalter nach einem der vorhergehenden Ansprüche,
bei dem die Drehachse (40) an der ersten Stelle (41) durch ein erstes Gleitlager (44) und an der zweiten Stelle (42) durch ein zweites Gleitlager (43) gelagert ist, wobei das erste Gleitlager (44) oder das zweite Gleitlager (43) als Bundbuchse ausgebildet ist, und wobei zwischen der umlaufenden Dichtung (50) und einer Umgebung eine O-Ring-Dichtung (46) ausgebildet ist, um den Innenraum des Gehäuses (10) von der Umgebung abzudichten.

15. Verfahren zum Herstellen eines Fluid-Umschalters mit einem Gehäuse (10) mit wenigstens drei Anschlüssen (11, 12, 13, 14), die in den Innenraum des Gehäuses (10) münden, und einer Ventilklappe (30) mit einer Drehachse (40), wobei die Ventilklappe (30) in dem Gehäuse (10) drehbar angeordnet ist, und wobei die Drehachse (40) an einer ersten Stelle (41) an dem Gehäuse (10) angebracht ist und an einer zweiten Stelle (42) an dem Gehäuse (10) angebracht ist, mit folgenden Schritten:
Anbringen einer umlaufenden Dichtung (50) an der Ventilklappe (30), wobei die umlaufende Dichtung (50) bei der ersten Stelle (41) einen ersten Ausweichabschnitt (51) und bei der zweiten Stelle (42) einen zweiten Ausweichabschnitt (52) aufweist, wobei der erste Ausweichabschnitt (51) und der zweite Ausweichabschnitt (52) ausgebildet sind, um der Drehachse (40) auf derselben Seite der Ventilklappe (30) auszuweichen; und
Einbringen der Ventilklappe (30) in den Innenraum des Gehäuses (10), so dass die Ventilklappe (30) über die umlaufende Dichtung (50) eine Begrenzung des Innenraums des Gehäuses (10) rutschend in Eingriff nimmt, so dass bei einer ersten Position der Ventilklappe (30) der erste Anschluss (11) mit dem zweiten Anschluss (12) verbunden ist und der erste Anschluss (11) von dem dritten Anschluss abgedichtet ist, und bei einer zweiten Position der Ventilklappe (30) der erste Anschluss (11) mit dem dritten Anschluss (13) verbunden ist und der erste Anschluss (11) von dem zweiten Anschluss (12) abgedichtet ist,
wobei die umlaufende Dichtung (50) ein O-Ring ist, der in einem O-Ring-Halteabschnitt (34) der Ventilklappe (30) gehalten ist und über die Ventilklappe (30) vorsteht, um den Innenraum des Gehäuses (10) rutschend in Eingriff zu nehmen, und
wobei die Ventilklappe (30) ein erstes Ventilklappenteil (31) und ein vom ersten Ventilklappenteil (31) separates zweites Ventilklappenteil (32) aufweist, wobei die umlaufende Dichtung (50) mit dem ersten Ventilklappenteil (31) durchgehend in Berührung ist, wobei die Drehachse (40) zwischen dem ersten Ventilklappenteil (31) und dem zweiten Ventilklappenteil (32) angeordnet ist, und wobei das zweite Ventilklappenteil (32) an dem ersten Ausweichabschnitt (51) und dem zweiten Ausweichabschnitt (52) der umlaufenden Dichtung (50) nicht mit der umlaufenden Dichtung (50) in Berührung ist.

## Claims

1. Fluid switchover device comprising:
a housing (10) comprising at least three ports (11, 12, 13, 14) leading into an interior space of the housing (10);
a valve flap (30) comprising a rotational axis (40), the valve flap (30) being rotatably arranged within the housing (10), and the rotational axis (40) being mounted to the housing (10) at a first location (41) and being mounted to the housing (10) at a second location (42); and
a circumferential seal (50) mounted to the valve flap (30) and comprising a first evasion portion (51) at the first location (41) and a second evasion portion (52) at the second location (42), the first evasion portion (51) and the second evasion portion (52) being configured to evade the rotational axis (40) on the same side of the valve flap (30), and wherein the valve flap (30) is configured to slidingly engage a boundary of the interior space of the housing (10) by means of the circumferential seal (50), so that at a first position of the valve flap (30), the first port (11) is connected to the second port (12) and the first port (11) is sealed off from the third port (13), and so that in a second position of the valve flap (30), the first port (11) is connected to the third port (13) and the first port (11) is sealed off from the second port (12),
wherein the circumferential seal (50) projects beyond the valve flap (30) so as to slidingly engage the interior space of the housing (10),
**characterized in that** the circumferential seal (50) is an O ring held within an O ring holding portion (34) of the valve flap (30), and the valve flap (30) comprises a first valve flap part (31) and a second valve flap part (32) separated from the first valve flap part (31), wherein the circumferential seal (50) is continuously in contact with the first valve flap part (31), wherein the rotational axis (40) is arranged between the first valve flap part (31) and the second valve flap part (32), and wherein the second valve flap part (32) is not in contact with the circumferential seal (50) at the first evasion portion (51) and the second evasion portion (52) of the circumferential seal (50).

2. Fluid switchover device as claimed in claim 1,
wherein the valve flap (30) comprises a first flat side (31) and a second flat side (32), wherein the first evasion portion (51) and the second evasion portion (52) extend either on the first flat side or on the second flat side, or
wherein the valve flap (30) comprises a front side, the circumferential seal (50) being mounted on the front side of the valve flap (30).

3. Fluid switchover device as claimed in any of the previous claims,
wherein the rotational axis (40) extends centrally within the valve flap (30), so that an area of the valve flap (30) between the first location (41) and an edge of the interior space of the housing (10) between a first pair of ports (11, 13) is identical to an area of the valve flap (30) between the first location (41) and an edge of the interior space of the housing (10) between a second pair of ports (12, 14); in the second pair of ports (12, 14), at least one port differs from the ports of the first pair of ports (11, 13).

4. Fluid switchover device as claimed in any of the previous claims,
wherein the valve flap (30) has a flat shape and four front sides, the rotational axis (40) projecting from a first front side and from a second front side,
wherein the circumferential seal (50) comprises one straight portion (53, 54) on each of the third and fourth front sides of the valve flap (30), wherein the first evasion portion (51) and the second evasion portion (52) being mounted on the first and second front sides and being connected to the straight portion (53, 54) on the third and fourth front sides, respectively, via a respectively straight portion (56a, 56b, 55a, 55b).

5. Fluid switchover device as claimed in claim 1,
wherein the first valve flap part (31) and the second valve flap part (32) are configured in the same manner,
wherein the first valve flap part (31) is screwed or bonded to the second valve flap part (32), and the rotational axis (40) is received between the first valve flap part (31) and the second valve flap part (32), wherein screw ends (25) are sealed off, or
wherein the rotational axis (40) has at least one alignment pin (47, 48) connected thereto which is attached to the rotational axis (40) or extends through a bore (45) within the rotational axis (40), the at least one alignment pin (47, 48) being arranged between the first valve flap part (31) and the second valve flap part (32).

6. Fluid switchover device as claimed in any of the previous claims,
which is configured as a two-way switch comprising four ports (11, 12, 13, 14), the four ports (11, 12, 13, 14) being arranged such that in the first position of the valve flap (30), the first port (11) is connected to the second port (12) and the third port (13) is connected to the fourth port (14), and so that in the second position of the valve flap (30), the first port (11) is connected to the third port (13) and the second port (12) is connected to the fourth port (14).

7. Fluid switchover device as claimed in claim 6,
wherein the interior space of the housing (10) is cylindrical and the four ports (11, 12, 13, 14) are arranged within the housing (10) such a manner as to lead into the interior space of the housing (10), wherein an angle of from 70 degrees to 110 degrees exists between two mouth centers of two adjacent ports of the four ports (11, 12, 13, 14).

8. Fluid switchover device as claimed in any of the previous claims,
wherein the rotational axis (40) extends through the housing (10) at the first location (41) and is sealed off from the surroundings of the fluid switchover device by a seal (46), and wherein the rotational axis (40) does not extend through the housing (10) at the second location (42) but is held within the housing (10) via a blind hole (18).

9. Fluid switchover device as claimed in any of the previous claims, comprising an actuator device (60) so as to actuate the rotational axis (40) as a function of a control signal so as to rotate the valve flap (30) between the first position and the second position.

10. Fluid switchover device as claimed in any of the previous claims,
wherein the housing (10) comprises an insert (10b) sealed off from an upper side (10c) of the housing (10) by an O-ring seal (17), or sealed off from a lower side (10a) of the housing (10) by an O-ring seal (16), the insert (10b) for a port of the at least three ports (11, 12, 13, 14) comprising a double O-ring seal (15) so as to keep a pipe, which adjoins the port of the at least three ports (11, 12, 13, 14), in a liquid-tight state.

11. Fluid switchover device as claimed in any of the previous claims,
wherein the housing (10) comprises a lower side (10a), an upper side (10c), and an insert (10b), wherein the insert (10b) has the at least three ports (11, 12, 13, 14) formed therein, and wherein the insert (10b) between the upper side (10c) and the lower side (10a) defines, together with the upper side and the lower side, the interior space of the housing (10), a mouth of a port of the at least three ports (11, 12, 13, 14) within the insert being provided with one chamfer (24), respectively, so that any wear and tear that might be caused by the sliding engagement at the circumferential seal (50) is reduced or eliminated.

12. Fluid switchover device as claimed in claims 10 or 11,
wherein the lower side (10c) comprises a blind hole (18) for receiving the rotational axis (40) at the second location (42),
wherein the upper side (10c) comprises a through hole (19) for receiving the rotational axis (40) at the first location (41), and
wherein the lower side (10a) and the upper side (10c) are otherwise configured in the same manner.

13. Fluid switchover device as claimed in any of the previous claims,
wherein the valve flap (30) is essentially formed of plastic,
wherein the rotational axis (40) is essentially formed of metal, and wherein the circumferential seal (50) is formed of a rubber material.

14. Fluid switchover device as claimed in any of the previous claims,
wherein the rotational axis (40) is mounted by a first slide bearing (44) at the first location (41) and is mounted by a second slide bearing (43) at the second location (42), the first slide bearing (44) or the second slide bearing (43) being formed as flange bushings, and an O-ring seal (46) being formed between the circumferential seal (50) and surroundings so as to seal off the interior space of the housing (10) from the surroundings.

15. Method of producing a housing (10) comprising at least three ports (11, 12, 13, 14) leading into the interior space of the housing (10), and a valve flap (30) comprising a rotational axis (40), the valve flap (30) being rotatably arranged within the housing (10), and the rotational axis (40) being mounted to the housing (10) at a first location (41) and being mounted to the housing (10) at a second location (42), the method comprising:
mounting a circumferential seal (50) to the valve flap (30), said circumferential seal (50) comprising a first evasion portion (51) at the first location (41) and a second evasion portion (52) at the second location (42), the first evasion portion (51) and the second evasion portion (52) being configured to evade the rotational axis (40) on the same side of the valve flap (30), and
inserting the valve flap (30) into the interior space of the housing (10), so that the valve flap (30) slidingly engages a boundary of the interior space of the housing (10) by means of the circumferential seal (50), so that at a first position of the valve flap (30), the first port (11) is connected to the second port (12) and the first port (11) is sealed off from the third port, and so that in a second position of the valve flap (30), the first port (11) is connected to the third port (13) and the first port (11) is sealed off from the second port (12)
wherein the circumferential seal (50) is an O ring held within an O ring holding portion (34) of the valve flap (30) and projecting beyond the valve flap (30) so as to slidingly engage the interior space of the housing (10).
wherein the valve flap (30) comprises a first valve flap part (31) and a second valve flap part (32) separated from the first valve flap part (31), wherein the circumferential seal (50) is continuously in contact with the first valve flap part (31), wherein the rotational axis (40) is arranged between the first valve flap part (31) and the second valve flap part (32), and wherein the second valve flap part (32) is not in contact with the circumferential seal (50) at the first evasion portion (51) and the second evasion portion (52) of the circumferential seal (50).

## Revendications

1. Permutateur de fluides, aux caractéristiques suivantes:
un boîtier (10) avec au moins trois raccords (11, 12, 13, 14) qui débouchent dans un espace intérieur du boîtier (10);
un clapet de soupape (30) avec un axe de rotation (40), où le clapet de soupape (30) est disposé de manière rotative dans le boîtier (10), et où l'axe de rotation (40) est monté à un premier endroit (41) sur le boîtier (10) et à un deuxième endroit (42) sur le boîtier (10); et
un joint circonférentiel (50) qui est monté sur le clapet de soupape (30) qui, au premier endroit (41), présente un premier segment de déviation (51) et, au deuxième endroit (42), présente un deuxième segment de déviation (52), où le premier segment de déviation (51) et le deuxième segment de déviation (52) sont conçus pour dévier l'axe de rotation (40) du même côté du clapet de soupape (30), et où le clapet de soupape (30) est conçu pour se mettre en prise par glissement, par l'intermédiaire du joint circonférentiel (50), avec une délimitation de l'espace intérieur du boîtier (10), de sorte que, dans une première position du clapet de soupape (30), le premier raccord (11) soit connecté au deuxième raccord (12) et que le premier raccord (11) soit rendu étanche par rapport au troisième raccord (13) et que, dans une deuxième position du clapet de soupape (30), le premier raccord (11) soit connecté au troisième raccord (13) et que le premier raccord (11) soit rendu étanche par rapport au deuxième raccord (12),
dans lequel le joint circonférentiel (50) fait saillie par rapport au clapet de soupape (30) pour se mettre en prise par glissement avec l'espace intérieur du boîtier (10),
**caractérisé par le fait que** le joint circonférentiel (50) est un joint torique qui est maintenu dans un segment de maintien de joint torique (34) du clapet de soupape (30), et que le clapet de soupape (30) présente une première partie de clapet de soupape (31) et une deuxième partie de clapet de soupape séparée (32) de la première partie de clapet de soupape (31), où le joint circonférentiel (50) est en continu en contact avec la première partie de clapet de soupape (31), où l'axe de rotation (40) est disposé entre la première partie de clapet de soupape (31) et la deuxième partie de clapet de soupape (32), et où la deuxième partie de clapet de soupape (32) n'est pas en contact avec le joint circonférentiel (50) au premier segment de déviation (51) et au deuxième segment de déviation (52) du joint circonférentiel (50).

2. Permutateur de fluides selon la revendication 1,
dans lequel le clapet de soupape (30) présente une première face plane (31) et une deuxième face plane (32), dans lequel le premier segment de déviation (51) et le deuxième segment de déviation (52) s'étendent soit sur la première face plane, soit sur la deuxième face plane, ou
dans lequel le clapet de soupape (30) présente une face frontale, dans lequel le joint circonférentiel (50) est monté sur la face frontale du clapet de soupape (30).

3. Permutateur de fluides selon l'une des revendications précédentes,
dans lequel l'axe de rotation (40) s'étend au centre dans le clapet de soupape (30), de sorte qu'une zone du clapet de soupape (30) entre le premier endroit (41) et un bord de l'espace intérieur du boîtier (10) entre une première paire de raccords (11, 13) soit égale à une zone du clapet de soupape (30) entre le premier endroit (41) et un bord de l'espace intérieur du boîtier (10) entre une deuxième paire de raccords (12, 14), dans lequel, dans la deuxième paire de raccords (12, 14), au moins un raccord est différent des raccords de la première paire de raccords (11, 13).

4. Permutateur de fluides selon l'une des revendications précédentes,
dans lequel le clapet de soupape (30) présente une forme plane et présente quatre faces frontales, dans lequel l'axe de rotation (40) fait saillie par rapport à une première face frontale et une deuxième face frontale,
dans lequel le joint circonférentiel (50) présente, respectivement sur la troisième face frontale et la quatrième face frontale du clapet de soupape (30), un segment droit (53, 54), dans lequel le premier segment de déviation (51) et le deuxième segment de déviation (52) sont montés sur la première et la deuxième face frontale, et sont connectés, par l'intermédiaire d'un segment droit respectif (56a, 56b, 55a, 55b), au segment droit (53, 54) sur la troisième, respectivement la quatrième face frontale.

5. Permutateur de fluides selon la revendication 1,
dans lequel la première partie de clapet de soupape (31) et la deuxième partie de clapet de soupape (32) sont réalisées identiques,
dans lequel la première partie de clapet de soupape (31) est vissée ou collée à la deuxième partie de clapet de soupape (32) et l'axe de rotation (40) est reçu entre la première partie de clapet de soupape (31) et la deuxième partie de clapet de soupape (32), où les extrémités de vis (25) sont rendues étanches, ou
dans lequel est connectée à l'axe de rotation (40) au moins un goujon (47, 48) qui est fixé à l'axe de rotation (40) ou s'étend à travers un alésage (45) dans l'axe de rotation (40), dans lequel l'au moins un goujon (47, 48) est disposé entre la première partie de clapet de soupape (31) et la deuxième partie de clapet de soupape (32).

6. Permutateur de fluides selon l'une des revendications précédentes,
qui est conçu comme permutateur à 2 voies qui présente quatre raccords (11, 12, 13, 14), où les quatre raccords (11, 12, 13, 14) sont disposés de sorte que, dans la première position du clapet de soupape (30), le premier raccord (11) soit connecté au deuxième raccord (12) et le troisième raccord (13) soit connecté au quatrième raccord (14), et que, dans la deuxième position du clapet de soupape (30), le premier raccord (11) soit connecté au troisième raccord (13) et le deuxième raccord (12) soit connecté au quatrième raccord (14).

7. Permutateur de fluides selon la revendication 6,
dans lequel l'espace intérieur du boîtier (10) est cylindrique, et les quatre raccords (11, 12, 13, 14) sont disposés dans le boîtier (10) de sorte qu'ils aboutissent dans l'espace intérieur du boîtier (10), dans lequel un angle entre deux centres d'embouchure de deux raccords adjacents des quatre raccords (11, 12, 13, 14) est compris entre 70 degrés et 110 degrés.

8. Permutateur de fluides selon l'une des revendications précédentes,
dans lequel, au premier endroit (41), l'axe de rotation (40) s'étend à travers le boîtier (10) et est rendu étanche par un joint (46) par rapport à l'environnement du permutateur de fluides, et dans lequel, au deuxième endroit (42), l'axe de rotation (40) ne s'étend pas à travers le boîtier (10), mais est maintenu, par l'intermédiaire d'un trou borgne (18), dans le boîtier (10).

9. Permutateur de fluides selon l'une des revendications précédentes, qui présente un dispositif d'actionnement (60) destiné à actionner l'axe de rotation (40) en fonction d'un signal de commande pour faire tourner le clapet de soupape (30) entre la première position et la deuxième position.

10. Permutateur de fluides selon l'une des revendications précédentes,
dans lequel le boîtier (10) présente un insert (10b) qui est rendu étanche par un joint torique (17) par rapport à une face supérieure (10e) du boîtier (10), ou qui est rendu étanche par un joint torique (16) par rapport à une face inférieure (10a) du boîtier (10), dans lequel l'insert (10b) présente, pour un raccord des au moins trois raccords (11, 12, 13, 14), une double étanchéité par joint torique (15) pour maintenir étanche aux liquides un tuyau à raccorder au raccord des au moins trois raccords (11, 12, 13, 14).

11. Permutateur de fluides selon l'une des revendications précédentes,
dans lequel le boîtier (10) présente une face inférieure (10a), une face supérieure (10c) et un insert (10b), dans lequel sont formés, dans l'insert (10b), les au moins trois raccords (11, 12, 13, 14) et l'insert (10b) entre la face supérieure (10c) et la face inférieure (10a) définit, ensemble avec la face supérieure et la face inférieure, l'espace intérieur du boîtier (10), dans lequel une embouchure d'un raccord des au moins trois raccords (11, 12, 13, 14) dans l'insert est chaque fois pourvue d'une phase (24), de sorte que soit réduite ou éliminée l'usure due à la venue en prise par glissement sur le joint circonférentiel (50).

12. Permutateur de fluides selon la revendication 10 ou 11,
dans lequel la face inférieure (10a) présente un trou borgne (18) destiné à recevoir l'axe de rotation (40) au deuxième endroit (42),
dans lequel la face supérieure (10c) présente un trou traversant (19) destiné à recevoir l'axe de rotation (40) au premier endroit (41), et
dans lequel la face inférieure (10a) et la face supérieure (10c) sont, sinon, réalisées identiques.

13. Permutateur de fluides selon l'une des revendications précédentes,
dans lequel le clapet de soupape (30) est sensiblement réalisé en matière plastique,
dans lequel l'axe de rotation (40) est sensiblement réalisé en métal, et dans lequel le joint circonférentiel (50) est réalisé en un matériau en caoutchouc.

14. Permutateur de fluides selon l'une des revendications précédentes,
dans lequel l'axe de rotation (40) est monté au premier endroit (41) par l'intermédiaire d'un premier palier coulissant (44) et au deuxième endroit (42) par l'intermédiaire d'un deuxième palier coulissant (43), dans lequel le premier palier coulissant (44) ou le deuxième palier coulissant (43) est conçu comme une douille à collet, et dans lequel est formée, entre le joint circonférentiel (50) et un environnement, une étanchéité par joint torique (46), pour rendre étanche l'espace intérieur du boîtier (10) par rapport à l'environnement.

15. Procédé de fabrication d'un permutateur de fluides avec un boîtier (10) avec au moins trois raccords (11, 12, 13, 14) qui débouchent dans l'espace intérieur du boîtier (10), et un clapet de soupape (30) avec un axe de rotation (40), dans lequel le clapet de soupape (30) est disposé de manière rotative dans le boîtier (10), et dans lequel l'axe de rotation (40) est monté à un premier endroit (41) sur le boîtier (10) et est monté à un deuxième endroit (42) sur le boîtier (10), aux étapes suivantes consistant à:
monter un joint circonférentiel (50) sur le clapet de soupape (30), où le joint circonférentiel (50) présente, au premier endroit (41), un premier segment de déviation (51) et, au deuxième endroit (42), un deuxième segment de déviation (52), où le premier segment de déviation (51) et le deuxième segment de déviation (52) sont formés pour dévier de l'axe de rotation (40) du même côté du clapet de soupape (30); et
introduire le clapet de soupape (30) dans l'espace intérieur du boîtier (10) de sorte que le clapet de soupape (30) se mette en prise par glissement, par l'intermédiaire du joint circonférentiel (50), avec une délimitation de l'espace intérieur du boîtier (10), de sorte que, dans une première position du clapet de soupape (30), le premier raccord (11) soit connecté au deuxième raccord (12) et que le premier raccord (11) soit rendu étanche par rapport au troisième raccord et que, dans une deuxième position du clapet de soupape (30), le premier raccord (11) soit connecté au troisième raccord (13) et que le premier raccord (11) soit rendu étanche par rapport au deuxième raccord (12),
dans lequel le joint circonférentiel (50) est un joint torique qui est maintenu dans un segment de maintien de joint torique (34) du clapet de soupape (30) et fait saillie par rapport au clapet de soupape (30) pour se mettre en prise par glissement avec l'espace intérieur du boîtier (10), et
dans lequel le clapet de soupape (30) présente une première partie de clapet de soupape (31) et une deuxième partie de clapet de soupape séparée (32) de la première partie de clapet de soupape (31), où le joint circonférentiel (50) est en continu en contact avec la première partie de clapet de soupape (31), où l'axe de rotation (40) est disposé entre la première partie de clapet de soupape (31) et la deuxième partie de clapet de soupape (32), et où la deuxième partie de clapet de soupape (32) n'est pas en contact avec le joint circonférentiel (50) au premier segment de déviation (51) et au deuxième segment de déviation (52) du joint circonférentiel (50).
